# EUROPÄISCHE PATENTSCHRIFT

(11) **EP 1 094 041 B1**
(45) Veröffentlichungstag und Bekanntmachung des Hinweises auf die Patenterteilung: **29.10.2003**
(21) Anmeldenummer: 00810919.1
(22) Anmeldetag: 05.10.2000
(51) Int. Cl.: C03C 3/087, E04F 13/14, C03B 13/14

(54) **Wand-oder Fassadenverkleidung aus Glas**
Wall or facade cladding made of glass
Pavement en verre pour parois ou façades

(30) Priorität: 21.10.1999 CH 193199
(43) Veröffentlichungstag der Anmeldung: 25.04.2001
(73) Patentinhaber: Interfloat Corporation, 9493 Mauren (LI)
(72) Erfinder: Weikinger, Josef, 9493 Mauren (LI)
(74) Vertreter: Hasler, Erich, Dr.

(56) Entgegenhaltungen:
- EP-A- 0 463 606
- EP-A- 0 463 607
- EP-A- 0 493 202
- EP-A- 0 968 968
- US-A- 4 261 706
- US-A- 5 663 110

## Beschreibung

### Technisches Gebiet der Erfindung

Die vorliegende Erfindung betrifft eine Glasplatte, insbesondere eine gezogene Glasplatte, mit einer wenigstens auf einer Seite matten (undurchsichtigen) Oberfläche, deren Verwendung als Aussenhaut eines Gebäudes sowie eine mit der undurchsichtigen Glasplatte hergestellte Gebäudehülle, Innen- oder Aussenwand.

### Stand der Technik

Herkömmliche Gläser besitzen einen Eisenoxidgehalt (Fe₂O₃) von 0.06 Gewichtsprozenten und mehr. Dieser Eisenoxidgehalt ist dafür verantwortlich, dass solche Gläser eine grünliche Farbe aufweisen.

Aus der EP-A-0 463 606 ist ein Klarglas mit einer Randfärbung bekannt, welche Randfärbung zu Holzfarbtönen passt. Damit diese Randfärbung auftritt, enthält das Klarglas auf der Basis von Natrium-Calcium-Silikat-Glas 66 bis 75 Gewichtsprozent SiO₂, 12 bis 20 Gewichtsprozent Na₂O, 7 bis 12 Gewichtsprozent CaO, sowie gegebenenfalls kleinen Mengen bis 3, 4, respektive 5 Gewichtsprozent K₂O, Al₂O₃ respektive MgO. Dieses Glas enthält ausserdem einen färbenden Anteil, der im Wesentlichen aus einem Gesamteisengehalt (Fe₂O₃) unter 0,02, Se zwischen 0,00003 und 0,0002, und CoO zwischen 0 und 0,0003 Gewichtsprozent. Dieser färbende Anteil enthält alle wesentlichen färbenden Bestandteile des Glases. Dadurch besitzt das Glas bei einer Dicke von 5,66 Millimetern einen Lichtdurchlässigkeit von mindesten 85 Prozent.

Das Klarglas ist speziell geeignet für Glasbestandteile an Möbelstücken. Der Vorteil dieses Glases liegt darin, dass die Färbung des Randes relativ hell ist und einen zu Holzfarbtönen passenden Farbton aufweist.

Aus der EP-A-0 463 607 ist ein Klarglas bekannt. Zur Erzielung einer hellen, azurblauen Färbung des Glasrandes weist das Glas eine spezielle Zusammensetzung auf. Das Klarglas weist die selbe Zusammensetzung auf, wie das in EP-A-0 463 606 offenbarte Klarglas, mit dem Unterschied, dass der färbende Anteil im Wesentlichen lediglich aus Eisenoxid (Fe₂O₃) besteht. Der Gehalt an Eisenoxid beträgt jedoch weniger als 0,02 Gewichtsprozent. Dabei ist das Verhältnis von FeO zu Fe₂O₃ wenigstens 0,4. Bei einer Dicke von 5,66 mm weist das Glas eine Lichtdurchlässigkeit von mindestens 87% auf. Dieses Klarglas wird ebenfalls als Möbelglas verwendet.

Beide Klargläser mit einem Eisengehalt von unter 0,02 Gewichtsprozent sind nicht lichtstreuend mattiert sondern durchsichtig. Die spezielle Zusammensetzung der Gläser ist bei beiden gewählt, um eine gewünschte Farbwirkung der Ränder einer Glasplatte zu erhalten.

Moderne Gebäude werden heutzutage oft mit einer Glasfassade ausgeführt. Die zur Herstellung der Glasfassade verwendeten Glasplatten sind in der Regel mit einer Reflexionsschicht beschichtet, um einerseits die Wärmestrahlung abzuhalten und anderseits die darunterliegende Konstruktion für den Betrachter unsichtbar zu machen. Auch diese Glasplatten weisen zwei hochtransparente, flache Oberflächen auf.

Zur Herstellung von mattierten Oberflächen einer Glasscheibe sind Ätz- und Sandstrahl-Verfahren bekannt. Die Nachteile dieser Verfahren sind in der EP-A-0 493 202 eingehend beschrieben. Die EP-A-0 493 202 schlägt deshalb eine lichtstreuende Glasscheibe vor, die durch Walzen des heissen Glases erhalten wird. Die lichtstreuende Oberfläche dieser Glasscheibe ist durch eingepresste Prägungen mit pyramidalen Kratern versehen. Diese Krater sind durchwegs identisch. Sie sind in einen Kreis einschreibbar, dessen Durchmesser zwischen 0,5 und 1,7 mm ist. Der Abstand zwischen zwei benachbarten Kratern ist kleiner als der grösste Durchmesser der Krater, vorzugsweise kleiner als 1 mm.

Durch die WO 95/20745 ist eine Wärmedämmungs- und Wärmekollektoranordnung bekannt geworden, bei welcher z.B. eine Mauerwerksaussenwand aussen mit einer solarenergietransparenten Wärmedämmschicht isoliert ist und die Wärmedämmschicht mit einer transparenten Abdeckung, z.B. Glas, versehen ist. Der Nachteil einer derartigen Glasfassade ist, dass die durch das Glas durchscheinende Farbe der Wärmedämmschicht durch die Eigenfarbe des Glases verfälscht wird.

### Aufgabe der Erfindung

Es ist Aufgabe der vorliegenden Erfindung, eine Glasplatte ohne Durchsicht, insbesondere Fassadenglasplatte, zur Verfügung zu stellen, welche sich für den Einsatz im Fassaden- und Wandbereich besonders eignet Insbesondere ist es ein Ziel, eine Glasplatte zur Verfügung zu stellen, welche sich für die ästhetische und farbliche Gestaltung einer Fassade gut eignet. Dabei soll sich die Glasplatte in Kombination mit einer eingefärbten Unterkonstruktion gut als farbneutrale Gebäudehülle oder als farbneutrale Wandverkleidung eignen.

### Beschreibung der Erfindung

Erfindungsgemäss wird dies bei einer Glasplatte gemäss Oberbegriff von Anspruch 1 dadurch erreicht, dass das Glas einen Eisenoxid-Gehalt von weniger als 0.02, vorzugsweise weniger als 0.015 Gewichtsprozenten und ganz besonders bevorzugt weniger als 0.01 Gewichtsprozenten aufweist. Ueberraschenderweise eignet sich eine Glasplatte aus Glas mit einem Eisenoxid-Gehalt von weniger als 0.02, vorzugsweise weniger als 0.015 Gewichtsprozenten und ganz besonders bevorzugt weniger als 0.01 Gewichtsprozenten gut als Fassaden- oder Wandverkleidung, weil Glas mit diesem unüblich geringen Eisenoxidgehalt praktisch völlig farblos ist und die Farbe der dahinterliegenden Schicht nicht verfälscht. Zweckmässigerweise hat die Glasplatte eine Dicke von > 5mm, vorzugsweise eine solche von > 6 mm, und besonders bevorzugt eine solche von > 8 mm, da nur Platten dieser Stärke den auftretenden Windlasten standzuhalten vermögen. Vorteilhaft ist das Glas auch im wesentlichen frei von Chromoxid (Cr₂O₃).

Gemäss einer besonders bevorzugten Ausführungsform kommt die matte Oberfläche durch eine Oberflächenstruktur zustande. Diese können beispielsweise durch punktförmige, in Abstand voneinander angeordnete Erhebungen gebildet sein. Ein besonders vorteilhafter ästhetischer Effekt lässt sich erreichen, wenn die Erhebungen prismenförmig oder pyramidenförmig sind. Die prismen- oder pyramidenförmigen Erhebungen bewirken, dass die Glasplatte je nach Blickwinkel des Betrachters eine unterschiedliche Farbe hat. Betrachtet man die Glasplatte in einem sehr spitzen Winkel, so erscheint diese praktisch weiss. Ist der Betrachtungswinkel ungefähr 45°, so scheint die Farbe des Hintergrundes der Glasplatte teilweise durch. Betrachtet man die Glasplatte von vorne, so ist die Farbe des Hintergrundes satt und unverfälscht erkennbar. Für einen Passanten, welcher an einem Gebäude mit einer derart verglasten Fassade vorbeigeht, ändert sich die Farbe des Gebäudes also je nach Betrachtungswinkel. Von Bedeutung dabei ist, dass das im wesentlichen farblose Glas die Farbe des Glashintergrundes, z.B. einer eingefärbten Wärmedämmschicht, nicht verfälscht. Dies erleichtert es dem Architekten und dem Bauherrn, die ästhetische Wirkung der Fassade von vorneherein besser abschätzen zu können.

Bezüglich der erzielbaren Wirkung der mit der erfindungsgemässen Glasplatte verkleideten Wand oder Fassade ist besonders vorteilhaft, wenn die Glasplatte in einem Abstand von ca. 2 bis 8, vorzugsweise 2.5 bis 5 cm, von der dahinterliegenden Wand angeordnet ist.

### Kurzbeschrieb der Figuren

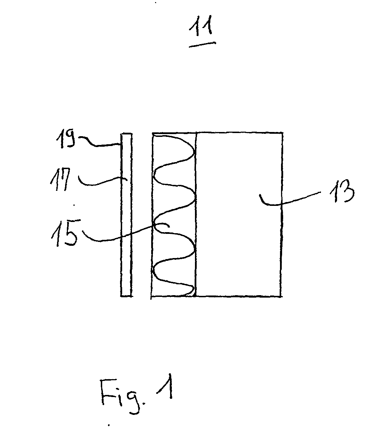

Eine Anwendung der erfindungsgemässen Glasplatte ist nachfolgend anhand der Figur 1, welche einen Fassadenaufbau unter Verwendung der Gasplatte beispielhaft zeigt.

Eine Fassadenwand 11 besteht aus einer Gebäudeaussenwand 13, einer auf der Gebäudeaussenwand 13 angeordneten Wärmedämmschicht 15 und einer in Abstand von der Wärmedämmschicht 15 angeordneten Glasplatte 17. Der Abstand zwischen der Glasplatte 17 und der Wärmedämmschicht 15 sorgt für eine Hinterlüftung der Fassade aber auch dafür, dass Einzelheiten der dahinterliegenden und in Abstand angeordneten Wärmedämmschicht, z.B. Befestigungsmittel, nicht mehr erkennbar sind. Der Abstand zwischen der Glasplatte 17 und der Wärmedämmschicht 15 beträgt vorteilhaft zwischen 3 und 4 cm.

Das vorteilhaft eingesetzte Glas besitzt eine einseitig (aussen) prismierte Oberfläche 19 (in Fig. 1 nicht ersichtlich). Diese ist eine blendfreie, diffuse Oberfläche und sorgt mit dem praktisch farblosen Glas für eine edle ästhetische Ansicht einer mit diesem Glas hergestellten Fassade.

Die chemische Analyse eines vorteilhaft eingesetzten Glases hat die folgenden wesentlichen Hauptbestandteile:

| | |
|---|---|
| Siliziumoxid (SiO₂) | 73.94% |
| Natriumoxid (Na₂O) | 15.07% |
| Calciumoxid (CaO) | 9.91% |

Daneben kann das Glas noch geringe Mengen an MgO, K₂O, SO₃, TiO₂, BaO und MnO enthalten. Die Anteile der vorgenannten Oxide beträgt vorzugsweise zusammen genommen weniger als 1.1 Gewichtsprozente.

Das eingesetzte Glas besitzt vorzugsweise einen hohen hemisphärischen Transmissionsgrad, wenn die Fassade Teil einer sogenannten Solar-Fassade ist (s.z.B. WO 95/20745). Der Transmissiongrad kann vermittels einer Ulbrichtschen Kugel gemessen werden. Das Messverfahren ist in den DIN-Vorschriften DIN 67507 und DIN 5036, Teil 3 und ISO 9845-1 dokumentiert.

Bei diesem Messverfahren wird von einer standardisierten Spektralverteilung der Sonnenstrahlung auf der Erdoberfläche ausgegangen. Die Spektralverteilung wiederum hängt von der Länge des Lichtweges durch die Atmosphäre ab. Die dazu relevante Grösse wird als AIR MASS (AM) bezeichnet und ist definiert als das Verhältnis der Luftmasse, die die Sonnenstrahlung passiert, zu der Luftmasse, die die Sonnenstrahlung passieren würde, wenn sie am Zenit stehen würde.

Bei der Messung der Transmission (totalen oder hemisphärischen) von Gläsern mit einer Oberflächenstruktur ist ferner zu berücksichtigen, dass ein Teil des Lichtes beim Durchgang durch das Glas gestreut wird. Daher muss zur Erfassung des Transmissionsgrades die transmittierte Strahlung insgesamt eingefangen und über den gesamten Halbraum hinter der Glasprobe integriert werden

Die oben beschriebene Glasplatte mit zwei parallelen Oberflächen wird vorzugsweise als Fassaden- oder Wandbekleidung eingesetzt, bei welcher eine Mehrzahl von Platten auf Stoss miteinander verbunden sind. Die Platten können durch Kleber miteinander unlösbar verbunden oder in geeigneten Profilen aufgenommen sein.

## Patentansprüche

1. Glasplatte, insbesondere eine gezogene Glasplatte, mit einer wenigstens auf einer Seite matten Oberfläche, **dadurch gekennzeichnet, dass** das Glas einen Eisenoxid-Gehalt von weniger als 0.02 Gewichtsprozenten aufweist.

2. Glasplatte nach Anspruch 1, **dadurch gekennzeichnet, dass** das Glas einen Eisenoxid-Gehalt (Fe₂O₃) von weniger als 0.015 Gewichtsprozenten und ganz besonders bevorzugt weniger als 0.01 Gewichtsprozenten aufweist.

3. Glasplatte nach Anspruch 1 oder 2, **dadurch gekennzeichnet, dass** die Glasplatte eine Dicke von > 5mm, und vorzugsweise eine solche von > 6 mm und ganz besonders bevorzugt > 8 mm aufweist.

4. Glasplatte nach einem der Ansprüche 1 bis 3, **dadurch gekennzeichnet, dass** das Glas im wesentlichen frei von Chromoxid (Cr₂O₃) ist.

5. Glasplatte nach einem der Ansprüche 1 bis 4, **dadurch gekennzeichnet, dass** die matte Oberfläche durch eine Oberflächenstruktur zustande kommt.

6. Glasplatte nach Anspruch 5, **dadurch gekennzeichnet, dass** die Oberflächenstruktur durch punktförmige, in Abstand voneinander angeordnete Erhebungen gebildet ist.

7. Glasplatte nach Anspruch 6, **dadurch gekennzeichnet, dass** die Erhebungen prismenförmig sind.

8. Glasplatte nach Anspruch 6, **dadurch gekennzeichnet, dass** die Erhebungen pyramidenförmig sind.

9. Glasplatte nach einem der Ansprüche 1 bis 8, **dadurch gekennzeichnet, dass** die wesentlichen chemischen Komponenten des Glases, welche vorzugsweise > 98.5 Gewichtsprozente ausmachen, Siliziumoxid (SiO₂), Natriumoxid (Na₂O) und Calciumoxid (CaO) sind.

10. Glasplatte nach einem der Ansprüche 1 bis 9, **dadurch gekennzeichnet, dass** der Transmissionsgrad des Glases der Glasplatte > 87%, vorzugsweise > 90% ist.

11. Glasplatte nach einem der Ansprüche 1 bis 10, **dadurch gekennzeichnet, dass** die Solarenergiedurchlässigkeit des Glases > 90%, vorzugsweise > ungefähr 91.5% ist.

12. Verwendung einer Glasplatte gemäss einem der Ansprüche 1 bis 11 als Aussenhaut oder Gebäudehülle eines Gebäudes.

13. Verwendung nach Anspruch 12 als hinterlüftete Aussenhaut eines Gebäudes.

14. Gebäudehülle mit einer Gebäudewand, einer auf der Gebäudewand angeordneten Wärmedämmschicht und einer in Abstand von der Wärmedämmschicht angeordneten Glasplatte gemäss einem der Ansprüche 1 bis 11.

15. Gebäudehülle nach Anspruch 14, **dadurch gekennzeichnet, dass** der Abstand zwischen der Glasplatte und der Wärmedämmschicht ca. 2 bis 8, vorzugsweise 2.5 bis 5 cm beträgt.

16. Wand- oder Fassadenbekleidung aus Glas aus einer Vielzahl von miteinander vorzugsweise auf Stoss verbundenen Glasplatten gemäss einem der Ansprüche 1 bis 11.

## Claims

1. Glass slab, in particular a drawn glass slab, with a matt surface at least on one side, **characterised in that** the glass exhibits an iron oxide content of less than 0.02 weight percent.

2. Glass slab according to Patent Claim 1, **characterised in that** the glass exhibits an iron oxide content (Fe₂O₃) of less than 0.015 weight percent and preferentially less than 0.01 weight percent.

3. Glass slab according to Patent Claim 1 or 2, **characterised in that** the glass slab features a thickness of >5 mm and preferably a thickness of >6 mm and preferentially >8 mm.

4. Glass slab according to one of the Patent Claims 1, 2 or 3, **characterised in that** the glass is essentially free of chromium oxide (Cr₂O₃).

5. Glass slab according to one of the Patent Claims 1 to 4, **characterised in that** the matt surface is achieved by a surface structure.

6. Glass slab according to Patent Claim 5, **characterised in that** the surface structure is formed by punctiform elevations arranged at a distance from each other.

7. Glass slab according to Patent Claim 6, **characterised in that** the elevations are prism-shaped.

8. Glass slab according to Patent Claim 6, **characterised in that** the elevations are pyramidal.

9. Glass slab according to one of the Patent Claims 1 to 8, **characterised in that** the essential chemical components of the glass that preferably constitute >98.5 weight percent are silicon oxide (SiO₂), sodium oxide (Na₂O) and calcium oxide (CaO).

10. Glass slab according to one of the Patent Claims 1 to 9, **characterised in that** the glass transmission factor of the glass slab is >87 %, preferably >90 %.

11. Glass slab according to one of the Patent Claims 1 to 10, **characterised in that** the solar energy transmission of the glass is >90 %, preferably > about 91.5 %.

12. Use of a glass slab according to one of the Patent Claims 1 to 11 as the outer skin or cladding of a building.

13. Use of a glass slab according to Patent Claim 12 as back-ventilated outer skin of a building.

14. Building cladding with a structural wall, a heat insulating layer arranged on the structural wall and a glass slab arranged at a distance from the heat insulating layer according to one of the Patent Claims 1 to 11.

15. Building cladding according to Patent Claim 14, **characterised in that** the distance between the glass slab and the heat insulating layer is approx. 2 to 8, preferably 2.5 to 5 cm.

16. Wall or façade glass cladding made of a large number of glass slabs connected preferably in abutting arrangement according to one of the Patent Claims 1 to 11.

## Revendications

1. Plaque de verre, en particulier plaque de verre étiré, avec une surface matte au moins sur un côté, **caractérisée en ce que** le verre présente un taux d'oxyde de fer de moins de 0,02 % en poids.

2. Plaque de verre selon la revendication 1, **caractérisée en ce que** le verre présente un taux d'oxyde de fer (Fe₂O₃) de moins de 0,015 % en poids et de manière tout particulièrement préférée de moins de 0,01 % en poids.

3. Plaque de verre selon la revendication 1 ou 2, **caractérisée en ce que** la plaque de verre présente une épaisseur supérieure à 5 mm, et de préférence une épaisseur supérieure à 6 mm, et de manière tout particulièrement préférée une épaisseur supérieure à 8 mm.

4. , Plaque de verre selon l'une des revendications 1 à 3, **caractérisée en ce que** le verre est substantiellement exempt d'oxyde de chrome (Cr₂O₃).

5. Plaque de verre selon l'une des revendications 1 à 4, **caractérisée en ce que** la surface matte vient d'une structure de la surface.

6. Plaque de verre selon la revendication 5, **caractérisée en ce que** la structure de la surface est formée par des bosses en forme de point placées espacées l'une de l'autre.

7. Plaque de verre selon la revendication 6, **caractérisée en ce que** les bosses sont en forme de prisme.

8. Plaque de verre selon la revendication 6, **caractérisée en ce que** les bosses sont en forme de pyramide.

9. Plaque de verre selon l'une des revendications 1 à 8, **caractérisée en ce que** les composantes chimiques essentielles du verre qui constituent de préférence plus de 98,5 % en poids sont l'oxyde de silicium (SiO₂), l'oxyde de natrium (Na₂O) et l'oxyde de calcium (CaO).

10. Plaque de verre selon l'une des revendications 1 à 9, **caractérisée en ce que** le degré de transmission du verre de la plaque de verre est supérieur à 87%, de préférence à 90%.

11. Plaque de verre selon l'une des revendications 1 à 10, **caractérisée en ce que** la transmissibilité de l'énergie solaire du verre est supérieure à 90%, de préférence supérieure à environ 91,5%.

12. Utilisation d'une plaque de verre selon l'une des revendications 1 à 11 comme enveloppe extérieure ou habillage extérieur d'un bâtiment.

13. Utilisation selon la revendication 12 comme enveloppe extérieure ventilée sur la face arrière d'un bâtiment.

14. Habillage d'un bâtiment avec un mur de bâtiment, une couche calorifuge placée sur le mur du bâtiment et une plaque de verre placée espacée de la couche calorifuge selon l'une des revendications 1 à 11.

15. Habillage d'un bâtiment selon la revendication 14, **caractérisé en ce que** l'espace entre la plaque de verre et la couche calorifuge est d'environ 2 à 8 cm, de préférence de 2,5 à 5 cm.

16. Revêtement de mur ou de façade en verre constitué par une multitude de plaques de verre reliées l'une à l'autre, de préférence bout-à-bout selon l'une des revendications 1 à 11.
